(19) Europäisches Patentamt / European Patent Office / Office européen des brevets

(11) **EP 4 328 187 A1**

(12) **EUROPEAN PATENT APPLICATION**

(43) Date of publication:
**28.02.2024   Bulletin 2024/09**

(51) International Patent Classification (IPC):
*C01G 53/00* (2006.01)

(21) Application number: **22306245.6**

(52) Cooperative Patent Classification (CPC):
**C01G 53/50;** C01P 2002/22; C01P 2002/52;
C01P 2002/72; C01P 2006/40

(22) Date of filing: **23.08.2022**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN**<br><br>(71) Applicants:<br> • **Centre national de la recherche scientifique**<br>  **75016 Paris (FR)**<br> • **College de France**<br>  **75005 Paris (FR)** | • **Sorbonne Université**<br>  **75006 Paris (FR)**<br><br>(72) Inventors:<br> • **MARIYAPPAN, Sathiya**<br>  **Paris (FR)**<br> • **GREPIN, Elisa**<br>  **Bourg-la-Reine (FR)**<br> • **TARASCON, Jean-Marie**<br>  **Paris (FR)**<br><br>(74) Representative: **Brevalex**<br>  **Tour Trinity**<br>  **1 B Place de la Défense**<br>  **92400 Courbevoie (FR)** |

(54) **A SODIUM LAYERED OXIDE, ITS USE AND ITS METHOD OF MANUFACTURE**

(57)   The invention relates to A sodium layered oxide of formula I:

$$Na_xM1^{a+}_{1-y-z-n}M2^{b+}_{y}M3^{c+}_{z}M4^{d+}_{n}O_2, \qquad (I),$$

wherein:

$M1^{a+}$, $M2^{b+}$, $M3^{c+}$ and $M4^{d+}$ are different transition metal ions or mixtures thereof, x is a number ranging from 0.5 to strictly less than 1;

y, z and n are numbers ranging from 0.01 to 0.85;

$y + z + n$ is less than 1;

a, b, c and d are the respective oxidation number of the transition metal ions M1, M2, M3 and M4, respectively; and the cumulative oxidation state of transition metal ions $a*(1-y-z-n)+(b*y)+(c*z)+(d*n)$ is equal to 4-x;

and wherein said sodium layered oxide of formula I is not $P2-Na_{2/3}Ni_{1/4}Mn_{1/2}Ti_{1/6}Zn_{1/12}O_2$, $P2-Na_{2/3}Ni_{1/4}Mn_{1/2}Ti_{1/6}Mg_{1/12}O_2$, or $P2-Na_{2/3}Ni_{1/4}Mn_{1/2}Ti_{1/6}Mg_{1/12}O_2$.

EP 4 328 187 A1

**Description**

**Field of the invention**

The invention generally relates to a novel sodium layered oxide compound, to a device incorporating said compound such as an electrode comprising said sodium layered oxide compound, or in an electrochemical energy storage cell or device for example a Na-ion battery. It further relates to a method to manufacture and/or to use such a compound and devices incorporating them.

**Background of the invention**

The sodium ion batteries are growing enormously in recent years as it could be a cost effective alternate for Li-ion batteries. Further, the observed safety during external short/ 0V discharge of the Na-ion cells make them more attractive for large scale applications. Different Na-ion cell chemistries are available at present, in which hard carbon is predominantly used as negative electrode and the electrolyte based on a sodium salt ($NaPF_6$/ $NaClO_4$ etc) dissolved in organic carbonate as electrolyte.[1] Whereas, the positive electrode can vary from either polyanionic materials (e.g. $Na_3V_2(PO_4)_2F_3$), layered sodium transitions metal oxide ($Na_xMO_2$, x is $\leq$ 1 and M is transition metal ion(s)) or Prussian blue analogs (PBAs).[2] Among them, polyanionic $Na_3V_2(PO_4)_2F_3$ (NVPF) exhibit long term structural stability upon cycling and also high power rate capability.[3] Each positive electrode family has their own advantages and disadvantages. However, the more attraction and expectations are always put on sodium layered oxides due to their low molecular weight, high density and also possibility to tune the electrochemical performances by carefully selecting the transition metal ions (M).[4,5]

Sodium layered oxides could crystallize in O3, P2 or P3 structure where the letters O and P represent the octahedral/prismatic coordination of the sodium ion and the number represents the number of MO2 layers in the unit cell.[6] The O3 structure is preferred for stoichiometric compounds where x is close to 1 in $Na_xMO_2$. P2/P3 structures are preferred for non-stoichiometric compounds where x $\leq$ 0.8 in $Na_xMO_2$. Among the O3, P2 and P3 phases, the O3 phase was studied more due to its high sodium content hence high capacity than the equivalent P2 or P3 phases. However, P2 and P3 phases are reported for their power rate capability in comparison to the O3 phase. Finally, in all O3, P2 and P3 phases, the common problem is the continuous phase transitions from P to O type phases during cycling (sodium removal and re-insertion).

Another major issue to be solved with sodium layered oxide is their sensitivity to moist air. For example, both P2 $Na_{0.67}Ni_{0.33}Mn_{0.67}O_2$ and O3 $NaNi_{0.5}Mn_{0.5}O_2$ are very sensitive to moist air. On exposure to moist air, the sodium from the alkali layer is replaced/ ion exchanged by $H^+$/ $H_2O$/ $H_3O^+$ to form a secondary phase together with the formation of $Na_2CO_3$ and NaOH in the surface. The $H^+$/ $H_2O$/ $H_3O^+$ insertion into the structure leads to poor electrochemical performance and also creates difficulties while processing the electrode coating. Due to the presence of carbonate and hydroxide impurities, the moisture reacted material forms agglomerates that leads to jellification and poor compatibility on Al foil for electrode processing.

In a previous patent application WO2020260294, it was reported that the Zn, Ti co-doping on $NaNi_{0.5}Mn_{0.5}O_2$ material to form O3 type $Na_xNi_{0.5-y}Zn_yMn_{0.5-z}Ti_zO_2$ (x ~ 1). The phase transitions of this material are reduced in comparison to the parent O3 $NaNi_{0.5}Mn_{0.5}O_2$ material. This co-substitution methodology enables to reach the full capacity of the material. Hence a capacity of 180- 200 mAh/g while cycling in the voltage window of 2.2- 4.5 V (vs $Na^+/Na^0$) was obtained. The O3 - $Na_xNi_{0.5-y}Zn_yMn_{0.5-z}Ti_zO_2$ (x ~ 1) also exhibit better stability on exposure to moist air than the parent $NaNi_{0.5}Mn_{0.5}O_2$ which loose Na to form $Na_2CO_3$ and/or NaOH upon exposure to air for a short time. The improved moisture stability comes from $Zn^{2+}$ and $Ti^{4+}$ co-substitution, however the exact role of these ions is not very well understood.

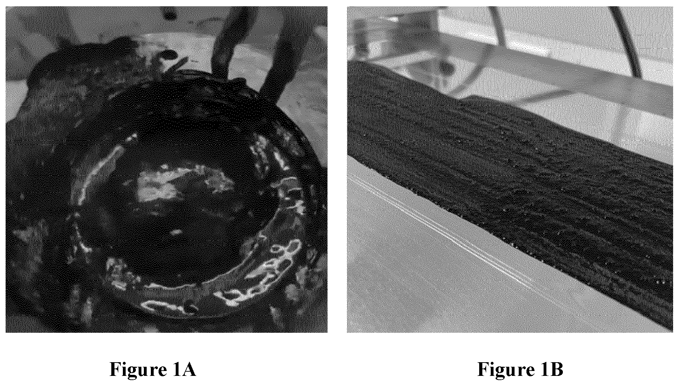

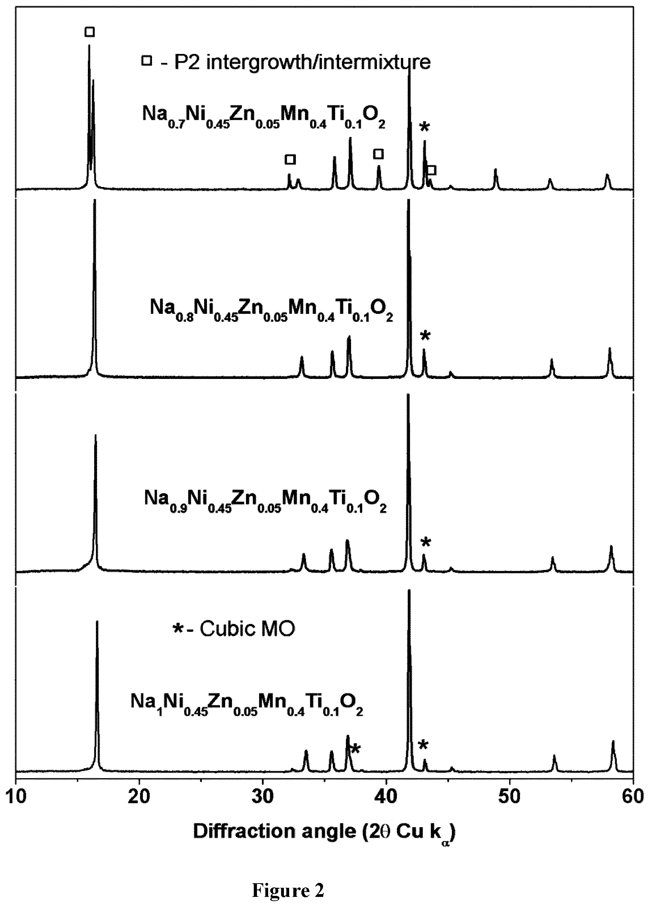

This O3 phase $Na_xNi_{0.5-y}Zn_yMn_{0.5-z}Ti_zO_2$ (x ~ 1) material, though it shows better stability on exposure to moist air, also has few problems when it is used to make an electrode slurry. All the components such as the solvent, binder etc. need to be in fully dried (i.e., no water) condition without which the slurry leads to agglomeration and hence poor coating as shown in Figure 1A & 1B. In such case, similar composition with less sodium is tried with the expectation to improve the moisture stability. However, by reducing the sodium content, the synthesis of $Na_xNi_{0.5-y}Zn_yMn_{0.5-z}Ti_zO_2$ leads to P2-O3 mixtures (Figure 2) always together with increasing amounts of secondary phase cubic metal oxide (($Ni_aZn_b$)O). Such presence of metal oxide impurities are known to increase the parasitic reactions with electrolyte during cycling and is detrimental for the cell performance.

EP3121879A1 discloses a P2 phase, alkali layered oxide material, which comprises nickel, and has the formula $M_xNi_{a-y}M^1_bM^2_cM^3_y$. When $M^1$ is Mn, $M^2$ is Ti and $M^3$ is Zn, ZnO impurities are observed (cf.[098]). EP3121879A1 is silent on moisture, but disclose the following compounds: $Na_{2/3}Ni_{1/4}Mn_{1/2}Ti_{1/6}Zn_{1/12}O_2$, $Na_{2/3}Ni_{1/4}Mn_{1/2}Ti_{1/6}Mg_{1/12}O_2$ and $Na_{2/3}Ni_{1/4}Mn_{1/2}Ti_{1/6}Mg_{1/12}O_2$.

Hence the growth of sodium layered oxide is impeded due to their reactivity towards moist air that leads to structural deterioration and necessitate moisture free environment for storage and electrode processing. Additionally, bulk syntheses of sodium layered oxide are often associated with sodium rich $Na_3MnO_4$ and cubic metal oxide impurities.

To overcome these difficulties, it has been surprisingly found that a particular type of sodium layered oxide would offer suitable resistance to moisture whilst offering satisfactory electrochemical properties such as cycling performance, capacity retention (including the use of full capacity) and/or cell voltage.

## Description of the invention

A sodium layered oxide according to the invention is one of formula I:

$$Na_xM1^{a+}_{1-y-z-n}M2^{b+}_yM3^{c+}_zM4^{d+}_nO_2, \qquad (I),$$

wherein:

$M1^{a+}$, $M2^{b+}$, $M3^{c+}$ and $M4^{d+}$ are different transition metal ions or mixtures thereof,
x is a number ranging from 0.5 to strictly less than 1;
y, z and n are numbers ranging from 0.01 to 0.85;
y + z + n is less than 1;
a, b, c and d are the respective oxidation number of the transition metal ions M1, M2, M3 and M4, respectively; and
the cumulative oxidation state of transition metal ions a*(1-y-z-n)+(b*y)+(c*z)+(d*n) is equal to 4-x;
and wherein said sodium layered oxide of formula I is not a P2-$Na_{2/3}Ni_{1/4}Mn_{1/2}Ti_{1/6}Zn_{1/12}O_2$, P2-$Na_{2/3}Ni_{1/4}Mn_{1/2}Ti_{1/6}Mg_{1/12}O_2$, or a P2- $Na_{2/3}Ni_{1/4}Mn_{1/2}Ti_{1/6}Mg_{1/12}O_2$.

Hence, the sodium layered oxides of formula I, of the invention has a crystal structure which may be chosen in the group consisting of O3, when x ranges from 0.8 to less than 1, a P2-O3 mixture, when x ranges between 0.7 to 0.8, and P2, when x is ≤ 0.7. Particularly preferably, its crystal structure is a P2-O3 structure.

When the cumulative oxidation state is more than 4-x, the excess sodium used in the synthesis can present as $Na_2CO_3$ secondary phase which can be used as sacrificial salt as reported in reference 7. Or, the transition metal can stabilize in lower oxidation state than the most stable one (eg. Stabilisation of $Mn^{3+}$ instead of $Mn^{4+}$).

Alternatively, or advantageously, another object of the invention is a sodium layered oxide of formula I':

$$Na_xM1^{a+}_{1-y-z-n}M2^{b+}_yM3^{c+}_zM4^{d+}_nO_2, \qquad (I'),$$

wherein:

$M1^{a+}$, $M2^{b+}$, $M3^{c+}$ and $M4^{d+}$ are different transition metal ions or mixtures thereof,
x is a number ranging from 0.68 to strictly less than 1;
y, z and n are numbers ranging from 0.01 to 0.85;
y + z + n is less than 1;
a, b, c and d are the respective oxidation number of the metal ions M1, M2, M3 and M4, respectively; and, preferably the cumulative oxidation state of transition metal ions a*(1-y-z-n)+(b*y)+(c*z)+(d*n) is equal to 4-x. In other words, one of the object of the invention is a sodium layered oxide of formula I which presents a layered structure being a P2-O3 or an O3 phase, preferably being a P2-O3 phase.

The type, P2, O3 or mixed P2-O3 types of layered structure can be identified by X ray diffraction, as shown in the examples. The XRD patterns can be collected using a Bruker d8 advanced diffractometer. The following parameters were set to collect X-ray pattern data:

- Detector slit = 9.5 mm
- Beam slit = 0.6 mm
- Range: $2\theta = 10°-70°$
- X-ray Wavelength=1.5406 Å (Angstroms) (CuKα)
- Speed: 0.36 seconds/step
- Increment: 0.018°

The data thus obtained were analyzed by Fullprof software, a crystallographic tool developed by the Institut Laue-Langevin for Rietveld profiling matching. The XRD patterns were compared to the integrated database of the software and were refined when required. The phase are defined by the number x and, if required by the use of X-ray diffraction, including but not limited to the device above described. Advantageously the compound of the invention are a layered metal oxide having a structure being a P2, O3 or P2-O3 phase, this meaning that the compounds is constituted of at least 95%, preferably 99%, of a phase P2, a phase O3 or a phase P2-O3.

According to the invention, $M1^{a+}$, $M2^{b+}$, $M3^{c+}$ and/or $M4^{d+}$ are advantageously chosen in the group consisting of the period 4 transition metals, that is: scandium (Sc), titanium (Ti), vanadium (V), chromium (Cr), manganese (Mn), iron (Fe), cobalt (Co), nickel (Ni), copper (Cu), and zinc (Zn). The period 5 transition metals, namely yttrium (Y), zirconium (Zr), niobium (Nb), molybdenum (Mo), technetium (Tc), ruthenium (Ru), rhodium (Rh), palladium (Pd), silver (Ag), and cadmium (Cd) could also be considered, although more expensive. Period 6 and Period 7 transition metals and in particular tungsten (W), iridium (Ir), platinum (Pt) and gold (Au) are also considered to fall within the definition of the invention as claimed.

Advantageously the transition metal ions (M1, M2, M3 and M4) are chosen to be in their most stable oxidation state at room temperature. This has shown to be particularly helpful in synthesizing the final material with slow/ furnace cooling without the requirement to do quenching. It also particularly helps in avoiding cubic metal oxide impurities.

It is preferred that, in formula I or I', M1 is Ni. It is further preferred that, in formula I or I', M2, M3 and M4 are chosen is the group consisting of Mg, Zn, Cu, Fe, V, Cr, Mn, Ge, Sn, Ti, Zr and Co and a mixture thereof, preferably in the group consisting of Zn, Mn, Ti, Cu, Fe, Mg and a mixture thereof, even more preferably in the group consisting of Zn, Mn and Ti.

It is further preferred that, in formula I or I', x is chosen in a range from 0.6 to 0.9.

Advantageously, in the sodium layered oxide of formula I or I', M1 is $Ni^{2+}$, M2 and M4 are either $Mn^{4+}$ or $Ti^{4+}$, and y is less than 0.07, preferably less than 0.06 and advantageously less than 0.5.

In particular, a compound of the invention as above described may have the formula $Na_xNi_{1-y-z-n}M2^{2+}_yMn_zTi_nO_2$ (II), where M2 is chosen in the group consisting of Mg, Zn, Cu, Fe, V, Cr, Ge, Sn, Zr, Co and mixtures thereof, and, preferably, in the group consisting of Mg, Zn, Cu, Fe and mixtures thereof. Advantageously, the y value of the sodium layered oxide of formula II y is less than 0.07, preferably less than 0.06 and advantageously less than 0.5.

A compound of formula II is preferably of formula $Na_xNi_{1-y-z-n}Zn_yMn_zTi_nO_2$ (III), which includes $Ni^{2+}$, $Zn^{2+}$, $Mn^{4+}$ and $Ti^{4+}$ ions, is particularly preferred. The usage of cheaper elements such as Mn, Ti and Zn with only minimum of $Ni^{2+}$ ion helps to reduce the total cost of the material. The layered metal oxide exhibits 120 mAh/g capacity with average voltage of 3.7V (very high average voltage compare to the reported P2 phases) and shows long term cycling stability.

A particular compound of the invention is $Na_{0.67}Ni_{0.3}Zn_{0.03}Mn_{0.52}Ti_{0.15}O_2$.

A particular compound of the invention is $Na_{0.67}Ni_{0.3}Zn_{0.03}Mn_{0.52}Ti_{0.15}O_2$.

Alternatively, ions such as $Fe^{2+}$, $Cu^{2+}$ or $Mg^{2+}$ can advantageously be used as a total, or partial, alternative to $Zn^{2+}$.

Hence a compound, or material, of formula II which is particularly preferred is one of formula $Na_xNi_{1-y-z-n}Fe_yMn_zTi_nO_2$ (IV).

A preferred compound of the invention is $Na_{0.7}Ni_{0.2}Fe_{0.3}Mn_{0.35}Ti_{0.15}O_2$.

A preferred compound of the invention is $Na_{0.7}Ni_{0.25}Fe_{0.2}Mn_{0.40}Ti_{0.15}O_2$.

A further compound, or material, of formula II which is also particularly preferred, has the formula $Na_xNi_{1-y-z-n}Cu_yMn_zTi_nO_2$ (V) or $Na_xNi_{1-y-z-n}Mg_yMn_zTi_nO_2$ (VI).

A particularly preferred compound of the invention is $Na_{0.67}Ni_{0.3}Cu_{0.03}Mn_{0.52}Ti_{0.15}O_2$.

A particularly preferred compound of the invention is $Na_{0.67}Ni_{0.3}Mg_{0.03}Mn_{0.52}Ti_{0.15}O_2$.

Another aspect of the invention relates to a process for preparing a sodium layered oxide such as a sodium layered oxide of formula I:

$$Na_xM1^{a+}_{1-y-z-n}M2^{b+}_yM3^{c+}_zM4^{d+}_nO_2, \qquad (I),$$

wherein:

M1ᵃ⁺, M2ᵇ⁺, M3ᶜ⁺ and M4ᵈ⁺ are different transition metal ions or mixtures thereof,
x is a number ranging from 0.5 to strictly less than 1;
y, z and n are numbers ranging from 0.01 to 0.85;
y + z + n is less than 1;
a, b, c and d are the respective oxidation number of the metal ions M1, M2, M3 and M4, respectively; and
the cumulative oxidation state of transition metal ions $a*(1-y-z-n)+(b*y)+(c*z)+(d*n)$ is equal to 4-x.

According to the invention the process comprises the steps of:

(a) mixing together powders of a sodium precursor and of transition metal precursors of said sodium layered oxide in stoichiometric amounts to obtain a solid powdered mixture;

(b) heating said solid powdered mixture in a temperature range of 500°C to 900°C, preferably in air atmosphere, to obtain a calcinated powder;

(c) cooling the calcinated powder at a rate of 1.5°C/min (preferably 1.°C/min) or less;

(d) milling said calcinated powder to obtain a milled calcinated powder;

(e) heating said solid powdered mixture in a temperature range of 700°C to 1100°C preferably in air atmosphere to obtain a milled re-calcinated powder;

(f) cooling said milled re-calcinated powder at a rate of 1.5°C/min (preferably 1. °C/min) or less.

The precursors can be selected amongst suitable compounds, including salt and/oxide of sodium or of the selected metals. Non limiting but preferred precursors are $Na_2CO_3$, $NiO$, $ZnO$, $CuO$, $MgO$, $Fe_2O_3$, $Mn_2O_3$ and $TiO_2$. It has been found advisable, especially if Mn is used, to avoid using an excess amount of $Na_2CO_3$ in order to reduce impurities such as $Na_2CO_3$/ $Na_3MnO_4$. Hence, it is preferred to strictly respect the stoichiometry of the compound to be obtained when selecting the amount of precursors to be used.

By "strictly respecting the stoichiometry" it is meant that the quantity of precursor should advantageously be selected to the be the stoichiometric amount $\pm$ 5%, preferably $\pm$ 1%, even more preferably $\pm$ 0.5%.

The precursors are preferably ground or milled for example, using ball milling. In this case the ball-to-powder ratio may be ranging from 1:10 to 1:30, preferably about 1:20. The mixture is then heated at a temperature, which is advantageously 800 °C or less, for example from 750 °C to 799 °C. This is a first annealing, or calcination, step. This first calcination step can be carried out for a period ranging from 1 h to 24 h, preferably for a period ranging from 4 h to 7.5 h, and more preferably for a period ranging from 5 to 6 h, such as 6 h. This step can be carried out at atmospheric pressure.

The intermediate milling step d) can be carried out by ball milling in the same conditions as above described. This milling step can take place for a time ranging from 10 minutes to 2 hours; a milling step of 1 hour was found to be effective.

Advantageously the second or calcination step e) takes place as a temperature which can be selected from 900 °C to 1000°C or alternatively can be ranging from 900 °C to 999°C or 900 °C to 949°C

Such a process was found to produce a homogenous material with the required single or combined P2, O3 or P2-O3 phases. This second calcination step can be carried out for a period ranging from 1 h to 24 h, preferably for a period ranging from 4 h to 7.5 h, and more preferably for a period ranging from 5 to 6 h, such as 6 h. This step can be carried out at atmospheric pressure.

Both the first and the second calcination steps can be carried out at a heating rate ranging from 1 to 10°C per minutes, and is preferably of 3 °C per minute.

It is also advantageous that when either or both cooling step c) and/or f) is carried out, the cooling take place at a pre-determined rate of 1 °C per minute or less. Such a rate can be important to obtain best results.

Alternatively, the material of the invention could also be synthesized using solution synthesis such as co-precipitation assisted solid state synthesis, sol-gel, hydrothermal, combustion synthesis etc. In a solution synthesis, the precursors used are usually salts such as metal nitrate, sulphate, carbonate etc. The same precursors as the ones above described (i.e. oxides) could also be used but they would then need to be dissolved (e.g. in nitric acid).

A further object of the invention is a compound (i.e. a sodium layered oxide) obtained or obtainable according to the process of the invention is also an object of the invention.

Another object of the invention is an electrode material which comprises:

- a sodium layered oxide according to the invention and above described;
- an electronically conductive additive such as carbon black; and
- optionally a polymeric binder.

The polymeric binder can be for example PVDF (polyvinylidene difluoride), CMC (Carboxymethyl cellulose sodium) and its derivate, PVDF is preferred.

The relative proportion of the components can be chosen in the ranges indicated below:

- 4 to 20 wt.%, preferably 4 - 15wt. % of conducting additive such as conductive carbon (carbon black, super P carbon from TIMCAL),
- 3- 6 wt. % of a polymeric binder such as PVDF; and
- 20-40 wt.% of a solvent (or dispersant) such as N-methyl pyrrolidone (NMP).

A method to manufacture the above mentioned electrode material is a further object of the invention. The method comprises mixing the sodium layered oxide according to the invention with the electronically conductive additive and, eventually, the polymeric binder. The electronically conductive additive is added in a suitable proportion, such as 5 to 20% wt.% in respect of the mass of the sodium layered oxide.

When a binder is used, the mix is dispersed in a solvent (i.e. a dispersant) and mix to obtain a slurry, in particular an homogenous slurry.

Another object of the invention is a positive electrode which comprises the electrode material of the invention in working contact with a current collector. It is preferred that the current collector comprise a carbon material or a metal such as aluminium. It is further preferred that a layer of the sodium layered oxide, or of electrode material, of the invention be casted on the current collector which may be in the shape of a sheet such as an aluminium foil.

A method to manufacture the above mentioned positive electrode is a further object of the invention. The method comprises associating or attaching the compound, or electrode material, of the invention to the current collector. The simple application of pressure can be used. When a binder/dispersant is used, the slurry obtained may be cast onto a current collector such as an aluminium foil. The dispersant is then removed, for example by heating it (e.g. 120°C).

Advantageously, a compression or pressure step , which may be carried out by a roller machine, can be applied to create or improve the association between the compound or electrode material of the invention.

A further object of the invention is an electrochemical cell comprising:

- an electrolyte;
- a negative electrode configured to reversibly accept sodium ions from an electrolyte and to reversibly release sodium ions to the electrolyte, the negative electrode having at least one current collector;
- a positive electrode comprising a compound (i.e. a sodium layered oxide) or an electrode material as above described configured to reversibly accept sodium ions from the electrolyte and to reversibly release sodium ions to the electrolyte, the positive electrode having at least one current collector; and
- a separator admixed with the electrolyte comprising sodium ions, in contact with both the negative and positive electrodes.

The separator is usually selected from the group consisting of glass fibres, polyolefin separators and cellulose-based films. In particular, the film can be a polypropylene (PP) film, a polyethylene (PE) film or, advantageously, a multi-layer film of PP+PE+PP.

The negative electrode comprises an negative, or anode, electrode material which is advantageously a sodium metal, a carbonaceous compound, hard carbon, antimony, tin, phosphorous or a mixture thereof such as a mixture of Sn and hard carbon. The anode material usually comprises an electronically conductive additive such as carbon black; and optionally a polymeric binder. The additive and the binder, and their relative proportions can be as described in respect of the positive material. The negative electrode can also have the same structure and similar current collector then the positive electrode. Furthermore it method of manufacture may be the same as above described.

The electrolyte of the electrochemical cell of the invention may comprises :

- a sodium salt, such as sodium hexafluorophosphate ($NaPF_6$), sodium perchlorate ($NaClO_4$), Sodium bis (fluorosulfonyl) imide (NaFSI), sodium bis(trifluoromethanesulfonyl)imide (NaTFSI), Sodium bis(pentafluoroethanesulfonyl)imide (NaBETI), Sodium tetrafluoroborate ($NaBF_4$), Na[B(hfip)4]·DME (hfip=hexafluoroisopropyloxy, OiPrF) and Na[B(pp)2] (pp=perfluorinated pinacolato, $O_2C_2(CF_3)_4$) or a mixture thereof;
- a solvent (or dispersant) such as dimethyl carbonate (DMC), ethyl methyl carbonate (EMC), diethyl carbonate (DEC), propylene carbonate (PC), ethylene carbonate (EC); Esters, such as methyl acetate (MA), ethyl acetate (EA), ethyl propionate (EP), or methyl propionate (MP), or a mixture thereof such as a mixture of EC/EP; and
- optionally, an additive such as vinylene carbonate (VC), 1,3-propanesultone (PS), succinonitrile (SN), sodium difluoro(oxalato)borate (NaODFB) or a mixture thereof such as VC and SN.

The sodium salt $NaPF_6$ is preferred.

The concentration of the sodium salt, in respect to the total volume of solvent(s) may range from 0.1 mol/L to 3 mol/L, preferably from from 0.5 mol/L to 2 mol/L.

The concentration of the electrolyte additive may generally vary from 0.05 to :10 wt.% in respect of the total weight of the electrolyte composition. Advantageously the following concentration of specific additive are used:

- Vinylene carbonate (VC) from 0.1 to 10 wt.%, preferably from 0.5 to 5.0 wt.%,
- Succinonitrile (SN) from 0.1 to 5 wt.%, preferably from 0.5 to 2.0 wt.%),
- Sodium difluoro(oxalato)borate (NaODFB) from 0.05 to 10 wt.%, preferably from 0.2 to 1.0 wt.%.

The electrolyte can be prepared by mixing the solvents, if it a mixture of solvents (for example a mixture of EC/PC/DMC in 1:1:2 ratio by volume) is considered; then adding the sodium salt (for example, $NaPF_6$, in a concentration of 1 mol/L); adding the additives (for example 5.0 wt.% VC, 1.0 wt.% SN) into the solution. Preferably these steps are carried out under stirring and the order or the addition steps can be changed such as adding the additive into the solvent first, then adding the salt. The whole process is advantageously carried out in inert atmosphere (like under Ar or $N_2$).

A further object of the invention is a battery comprising a series of electrochemical cells of the invention. The positive electrode, separator and negative electrode can be stacked layer by layer (one layer of electrodes by one layer of separator), eventually being folded and/or wound, to a cell core. The cell core is placed inside a cell shell and dried. The drying can take place at 85 °C under vacuum (e.g. less than -1,0 bar) for 24 hours. Then the electrolyte is injected and sealed to the Na ion battery of the invention. The method of manufacturing the battery of the invention is a further object of the invention.

The electrochemical cell or the battery according to the invention can adopt various suitable configuration such as a coin cell, a pouch cell, a cylindrical cell (18650, 21700, 36500 etc.) or a prismatic cell.

Yet a further object of the invention is the use of a compound or material of the invention as an electroactive compound or material in a cell or a battery, preferably as a positive electrode material.

The use of the battery according to the invention includes for example its incorporation in microgrids stabilizing power grids, electrochemical storage devices for intermittent renewable energy (e.g. solar, wind energy), mobile storage devices for electric vehicles (end-of-life rechargeable buses, rental vehicle fleets), domestic electrical power storage devices, emergency power-supply or energy storage device for hospitals, schools, factories, computer clusters, servers, companies, and any other public and/or private buildings or infrastructure. The compound according to the invention or a device incorporating said compound can be of use for example for industries in following fields: automobile, computer, banking, video game, leisure, creative, cultural, cosmetic, life science, aviation, pharmaceutical, metal and steel, rail, military, nuclear, naval, space, food, agriculture, construction, glass, cement, textile, packaging, electronics, petrochemical, and chemical industries.

The foregoing and other objects, aspects, features and advantages of the invention will become more apparent from the following examples and from the claims.

**Brief description of the figures**

The present invention will now be described with reference to the following figures in which:

Fig. 1A shows the slurry of comparative example and Fig. 1B shows this slurry applied onto an aluminium foil as a coating.

Fig. 2 shows the X-ray diffraction pattern of $Na_xNi_{0.45}Zn_{0.05}Mn_{0.4}Ti_{0.1}O_2$ with varying amount of sodium content from 1 to 0.7.

Fig. 3 shows the X-ray diffraction pattern of 3 different sodium layered oxides prepared according to the invention and described in example 2 compared with the prior art compound O3-phase $NaNi_{0.45}Zn_{0.05}Mn_{0.4}Ti_{0.1}O_2$;

Fig.4 shows the X-ray diffraction pattern of the compounds of Fig.3 as prepared (Fig. 4A) and after being exposed to 55% relative humidity (Fig. 4B).

Fig. 5 shows a slurry comprising a P2-O3-phase $Na_{0.76}Ni_{0.35}Zn_{0.03}Mn_{0.52}Ti_{0.1}O_2$ according to the invention applied onto an aluminium foil as a coating.

Fig. 6 shows the cycling performance in Na-ion half cells having sodium metal as negative electrode of P2 $Na_{0.67}Ni_{0.3}Zn_{0.03}Mn_{0.52}Ti_{0.15}O_2$ (P2 $Na_{0.67}MO_2$ is), P2-O3 $Na_{0.76}Ni_{0.35}Zn_{0.03}Mn_{0.52}Ti_{0.1}O_2$ (P2-O3-$Na_{0.76}MO_2$), O3 $Na_{0.9}Ni_{0.4}Zn_{0.05}Mn_{0.4}Ti_{0.15}O_2$ (O3 $Na_{0.9}MO_2$) and prior art O3 $NaNi_{0.45}Zn_{0.05}Mn_{0.4}Ti_{0.1}O_2$ (O3 $NaMO_2$).

Fig. 7 shows the cycling performance of the same compounds as in Fig. 6 after exposure to 55% relative humidity.

Fig.8 shows the electrochemical properties of the same compounds as in Figs 6 in Na-ion full cells having hard carbon as negative electrode wherein Fig. 8A shows the capacity vs composition profile, Fig. 8B the capacity retention and Fig. 8C an histogram showing the energy obtained and the point (right axis) representing the average cell voltage of these materials.

Fig. 9A shows the X-ray diffraction pattern of P2 $Na_{0.7}Ni_{0.2}Fe_{0.3}Mn_{0.35}Ti_{0.15}O_2$.

Fig. 9B shows cycling performance in Na-ion half cells having sodium metal as negative electrode of P2 $Na_{0.7}Ni_{0.2}Fe_{0.3}Mn_{0.35}Ti_{0.15}O_2$.

Fig. 10A shows the X-ray diffraction pattern of P2 $Na_{0.7}Ni_{0.25}Fe_{0.2}Mn_{0.35}Ti_{0.15}O_2$.

Fig. 10B shows cycling performance in Na-ion half cells having sodium metal as negative electrode of P2 $Na_{0.7}Ni_{0.25}Fe_{0.2}Mn_{0.35}Ti_{0.15}O_2$.

Fig. 11 shows cycling performance in Na-ion half cells having sodium metal as negative electrode of (from top to bottom): P2 $Na_{0.67}Ni_{0.3}Cu_{0.03}Mn_{0.52}Ti_{0.15}O_2$, $Na_{0.67}Ni_{0.3}Mg_{0.0}3Mn_{0.52}Ti_{0.15}O_2$ and P2 $Na_{0.67}Ni_{0.3}Zn_{0.03}Mn_{0.52}Ti_{0.15}O_2$

Fig. 12 shows the XRD pattern of the P2-O3 $Na_{0.76}Ni_{0.35}Zn_{0.03}Mn_{0.52}Ti_{0.1}O_2$ of Example 6 wherein the synthesis is carried out with excess $Na_2CO_3$. The XRD pattern shows $Na_2CO_3$ as secondary phase (marked with a star in the figure).

Fig. 13 shows the formation of O3 $Na_{0.76}Ni_{0.35}Zn_{0.03}Mn_{0.52}Ti_{0.1}O_2$ by by repeated re-heating of the mixture obtained in Fig. 12.

**Comparative Example 1**

O3-phase $NaNi_{0.45}Zn_{0.05}Mn_{0.4}Ti_{0.1}O_2$ was obtained as described in example 1b by solid state synthesis of WO2020/260294. A slurry of this material was obtained by mixing it with:

- 15wt. % of conducting carbon (carbon black, super P carbon from TIMCAL),
- 5 wt. % of PVDF as a binder;
- 30 wt.% of N-methyl pyrrolidine (NMP) as a solvent. The solvent (i.e. dispersant) will be subsequently removed during drying and its quantity can thus be chosen to obtain the required viscosity of the slurry.

Then the transition metal composition was kept constant and the sodium stoichiometry was varied: $Na_{0.9}Ni_{0.45}Zn_{0.05}Mn_{0.4}Ti_{0.1}O_2$, $Na_{0.8}Ni_{0.45}Zn_{0.05}Mn_{0.4}Ti_{0.1}O_2$ and $Na_{0.7}Ni_{0.45}Zn_{0.05}Mn_{0.4}Ti_{0.1}O_2$ powders were obtained using the same method as for the O3-phase $NaNi_{0.45}Zn_{0.05}Mn_{0.4}Ti_{0.1}O_2$.

Figure 1A shows the formation of agglomerates in the slurry of O3 $NaNi_{0.45}Zn_{0.05}Mn_{0.4}Ti_{0.1}O_2$. To form an electrode, the slurry was coated on an aluminium foil (see Figure 1B). The coating became inhomogeneous due to agglomerates in the slurry. The reason for such agglomerate formation was found to be undried PVDF-NMP mixture that contains a few ppm (~10 ppm) of water.

X-ray diffraction patterns of $Na_xNi_{0.45}Zn_{0.05}Mn_{0.4}Ti_{0.1}O_2$ components having amount of sodium content x of 1, 0.9, 0.8 and 0.7 are shown in Figure 2. By reducing the sodium content to 0.7, the P2 phase starts to appear. However, in all these materials, cubic metal oxide impurities (*Cubic MO) are observed whose content increases with reducing sodium content. It shows the importance of fine tuning transition metals stoichiometries as per sodium stoichiometry.

**Example 2**

The following sodium layered oxides were prepared:

P2-phase $Na_{0.67}Ni_{0.3}Zn_{0.03}Mn_{0.52}Ti_{0.15}O_2$

P2-O3-phase $Na_{0.76}Ni_{0.35}Zn_{0.03}Mn_{0.52}Ti_{0.1}O_2$

O3-phase $Na_{0.9}Ni_{0.4}Zn_{0.05}Mn_{0.4}Ti_{0.15}O_2$

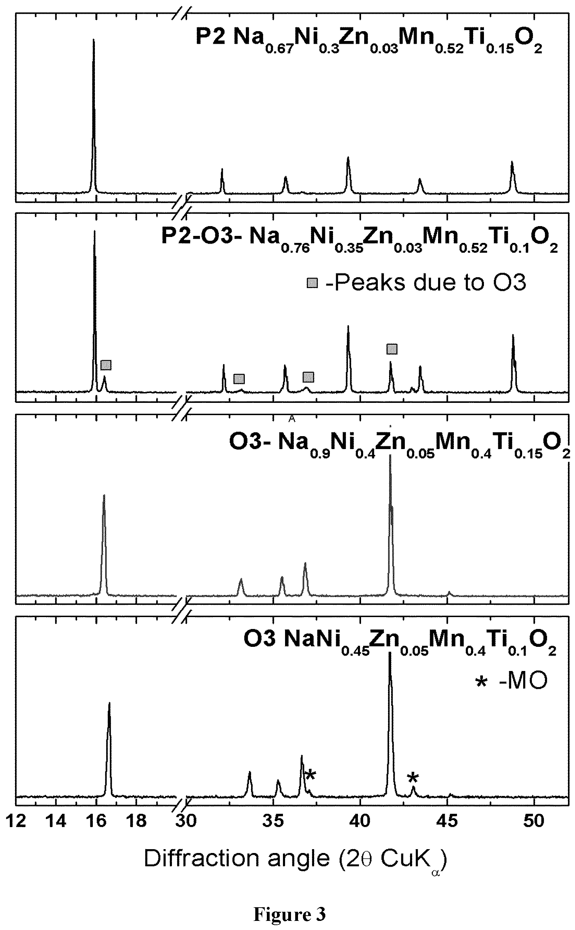

The materials were synthesized in 100 g batches. The stoichiometric amount of sodium and transition metal precursors ($Na_2CO_3$, $NiO$, $ZnO$, $CuO$, $MgO$, $Fe_2O_3$, $Mn_2O_3$ and $TiO_2$) were mixed together by hand grinding followed by dry ball milling for one hour. The ball milling step was carried out using a SPEX 8000MTM mixer mill using ball milling balls and containers made of hardened steel. Ball to powder ratio was about 1:20. The mixture was transferred into alumina crucible and heated to 800 °C for 6h in air atmosphere with a heating rate of 3°C $min^{-1}$ followed by cooling to room temperature cooled slowly (1°C/min) with subsequent intermediate ball milling for one hour in order to ensure homogeneity and reheating at 900/ 1000 °C for 6 hours at the same conditions as above. Excess of $Na_2CO_3$ was strictly avoided to eliminate the $Na_2CO_3$/ $Na_3MnO_4$ impurities. The calcined powders were cooled slowly (1°C/min) and transferred immediately in an argon filled glove box to avoid any reaction with the moisture/ air. Alternatively, the material could also be synthesized using solution synthesis such as co-precipitation assisted solid state synthesis, sol-gel, hydrothermal, combustion synthesis etc. As shown in Fig. 3 the material with least sodium content (x= 0.67) crystallizes in P2 phase and slightly higher sodium amount leads to P2-O3 mixture (x= 0.76). Pure O3 phase is obtained with x= 1 and 0.9. However, the material with x= 1 (prior art) exhibits cubic metal oxide impurity peaks which are reduced for the x= 0.9 phase.

The pure P2 phase formed strictly when the sodium content is equal to or less than 0.67 (x≤0.67). Similarly, the O3 phase is formed for the sodium content 0.8 - 1, more specifically for x= 1. The P2- O3 mixture can be considered as 75% of P2 phase (x= 0.67) with 25% of O3 phase (x= 1).

The compounds of the invention P2-phase $Na_{0.67}Ni_{0.3}Zn_{0.03}Mn_{0.52}Ti_{0.15}O_2$, P2-O3-phase $Na_{0.76}Ni_{0.35}Zn_{0.03}Mn_{0.52}Ti_{0.1}O_2$ and O3-phase $Na_{0.9}Ni_{0.4}Zn_{0.05}Mn_{0.4}Ti_{0.15}O_2$ and the prior art compound O3-phase $NaNi_{0.45}Zn_{0.05}Mn_{0.4}Ti_{0.1}O_2$ were tested for their moisture sensitivity by storing them under controlled relative humidity (RH) of 55%. The relative humidity was controlled using a saturated solution of $Mg(NO_3)_2.6H_2O$ (Sigma Aldrich) in water. The saturated magnesium nitrate solution and samples under analysis were kept in a sealed desiccator to ensure the required relative humidity.

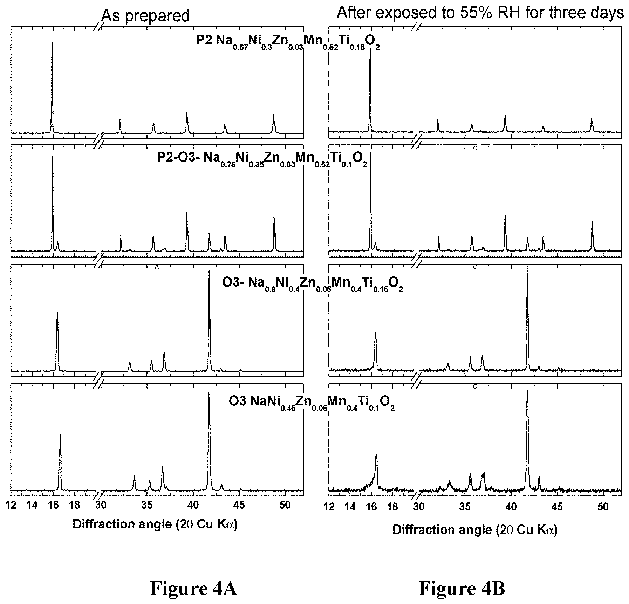

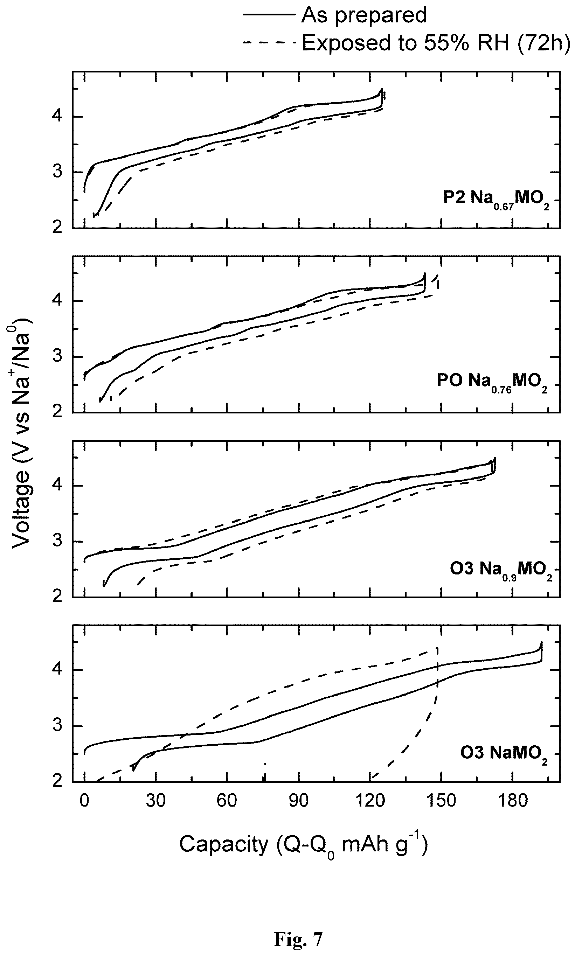

As shown in Fig.4 no or negligeable degradation is observed with P2 and P2-O3 compositions and a little degradation is observed with the O3-phase $Na_{0.9}Ni_{0.4}Zn_{0.05}Mn_{0.4}Ti_{0.15}O_2$ whereas more degradation is observed for O3-phase $NaNi_{0.45}Zn_{0.05}Mn_{0.4}Ti_{0.1}O_2$. This phenomenon was reconfirmed while cycling the "as prepared" and "air exposed" materials in Na-metal half cells (Figure 7).

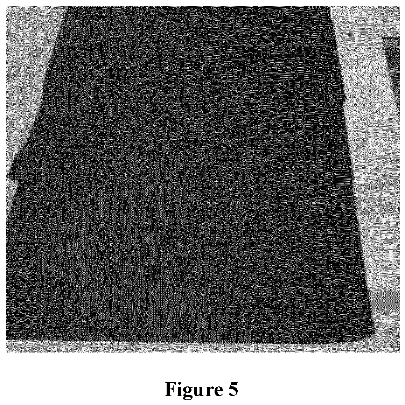

A slurry of a P2-O3-phase $Na_{0.76}Ni_{0.35}Zn_{0.03}Mn_{0.52}Ti_{0.1}O_2$ was prepared as described in comparative example 1. The slurry for electrode coating was made outside the dry room in moist air atmosphere and, as shown in Fig. 5, no jellification or agglomeration was observed.

### Example 3 : Cycling performances

The layered oxides prepared were used for their electrochemical performances and tested in half-cells and full-cells configuration. The electrodes according to the invention were made by selecting one or more layered oxide compound obtained in Examples 2.

The layered oxide active materials (positive or working electrode) in all cell configurations were used in powdered form. The layered oxide materials for electrochemical analyses were mixed with 15 w/w % carbon black (super P carbon, 25 TIMCAL) and ball milled for 30 min using SPEX 8000M mixer mill. Hardened steel ball milling container with balls made of hardened steel was used to mill 3 g of oxide with a compound to ball weight ratio of 1:35. The cycling performances of the materials were tested in Swagelok type half cells using Na metal as counter electrode and in coin type Na-ion full cells using hard carbon negative electrode.

The active material sodium layered oxide for the electrochemical analysis is mixed with 15 % carbon to improve the electronic conductivity and the powder electrode is used as such for all electrochemical analyses.

The counter hard carbon electrode used in the full cell assembly was prepared at ambient atmosphere outside the glovebox. The hard carbon negative electrode powder was provided by Aekyung Petrochemical, Republic of Korea. The average particle size and the BET surface area of this hard carbon was 9 $\mu$m and 3.29 $m^2g^{-1}$ respectively. The hard carbon powder thus obtained was mixed with 4 w/w% conducting carbon (super P carbon from TIMCAL) and binder. The binder used here were either PVDF in N-methyl pyrrolidine (NMP) or carboxymethyl cellulose 25 sodium and/or its derivatives in water solvent. The negative electrode slurry was prepared by mixing active material, conducting carbon and binder in NMP respectively in the ratio of 92:4:4. The slurry thus obtained was coated on an Al foil with a mass loading of 5-6 mg·$cm^{-2}$. The coated hard carbon films were calendared to reduce the porosity of the electrode to nearly 50%. The electrodes were cut into circular discs of 8-13 mm diameter and were dried at 80 °C before using in the full-cell assembly and stored in the argon filled glove box.

The positive to negative active materials were balanced according to their practically achievable capacity. For example, the hard carbon electrode used in all cell assemblies exhibits a first cycle discharge capacity of 300 mAh·$g^{-1}$. In this case, as the positive electrode shows about 170 mAh·$g^{-1}$ the positive to negative material weight ratio of (O3 $NaMO_2$)/(Hard carbon) about 1. 7:1 was used in order to counterbalance the capacity of positive electrode. However, the negative hard carbon electrode was used in about 4 w/w % excess to avoid any sodium plating. In other words, an additional amount of negative electrode active material in mg is used to get an additional capacity of 4 % to the actual amount of negative hard carbon required to balance the positive electrode. In other words, once the electrode capacity was known, the quantity of active material on either electrode was adjusted so that, if the capacity ratio of each electrodes is expressed as follows:

$$\text{Capacity ratio= Positive cell capacity/Negative cell capacity= pc/ne}$$

Then, the total mass of active compound of each electrode was adjusted so that the negative electrode mass of active compound is as follows:

$$\text{Negative electrode mass= positive electrode mass x (pc/ne),}$$

where pc is lower than ne.

The full cells were 2032 (diameter= 20mm, height =3.2mm) coin type cells. The hard carbon coated on aluminium foil electrode described above was used as negative electrode with 0.8-1 ml of 1M $NaPF_6$ in Propylene Carbonate (PC) as electrolyte and two layers of glass fibre separator 7' (Whatmann, model GF/D (PoreSize: 2.7 IJm, Diameter: 5.5 cm, Thickness: 675 IJm). The separator 7' was cut into circular disc of diameter of about 18 mm.

The P2 material thus formed $Na_{0.67}Ni_{0.3}Zn_{0.03}Mn_{0.52}Ti_{0.15}O_2$ in our trials (Figure 3) exhibit high stability on exposure to moist air (Figure 4) but the least capacity of ~125 mAh/g (Figure 5) among the studied compositions.

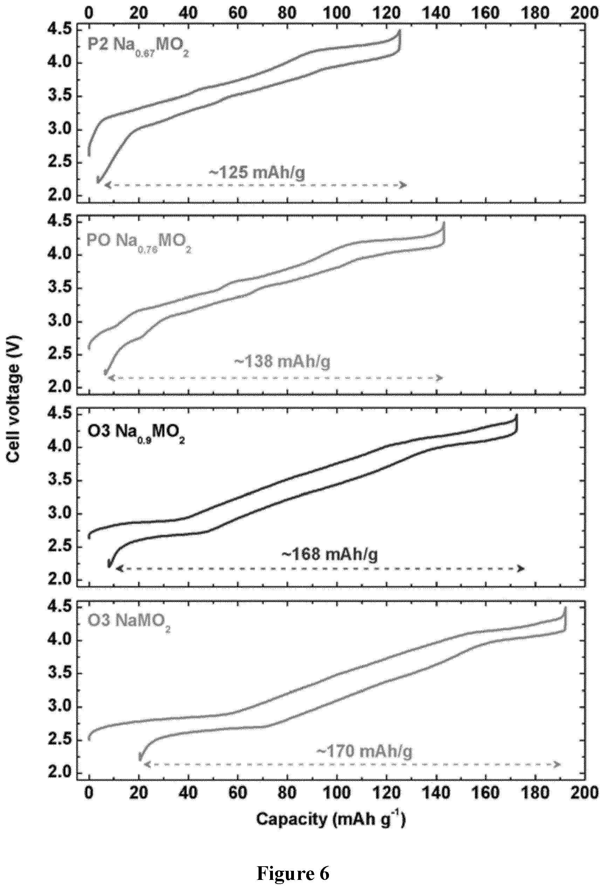

As shown in Fig.6 by increasing the sodium content to >0.7, the material crystallizes in major P2 phase with a small amount of O3 phase. By doing so, the practical capacity is increased to ~140 mAh/g and the material is found to be very stable on exposure to moist air (Figure 4 and 7). Such stability on exposure to moist air is due to the high P2 phase content together with the better stability of O3 phase having $Zn^{2+}$ and $Ti^{4+}$ ions. Hence the material can be coated into a smooth and homogenous electrode film (Figure 5) by doing the slurry in normal air/ atmosphere. Increasing further the sodium content, the material crystallizes to pure O3 phase, however with better stability to moist air (e.g., x= 0.9).

Figure 7 shows that the P2 phase exhibits exactly the same electrochemical performance before and after exposure (Fig.7) to moist air indicating its stability towards moist air. However, phases containing O3 component show comparatively poor electrochemical performance after exposure to moist air. The overall stability towards moist air follows the order, 0.67Na >> 0.76Na > 0.9Na > 1Na.

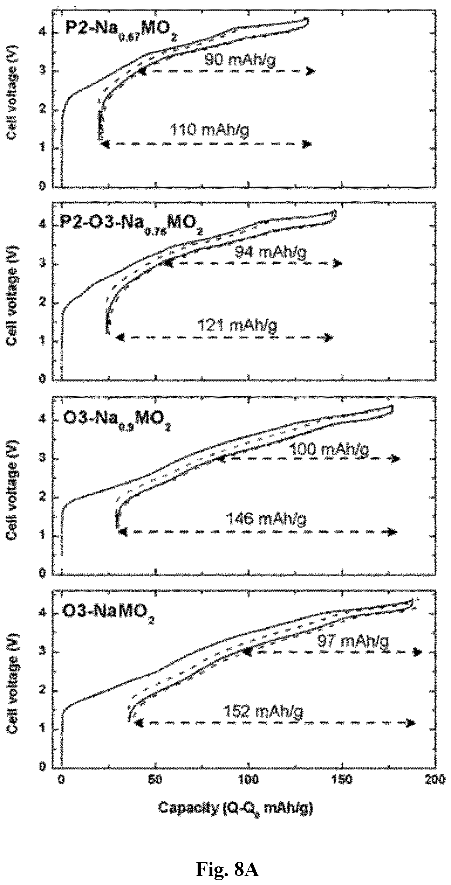

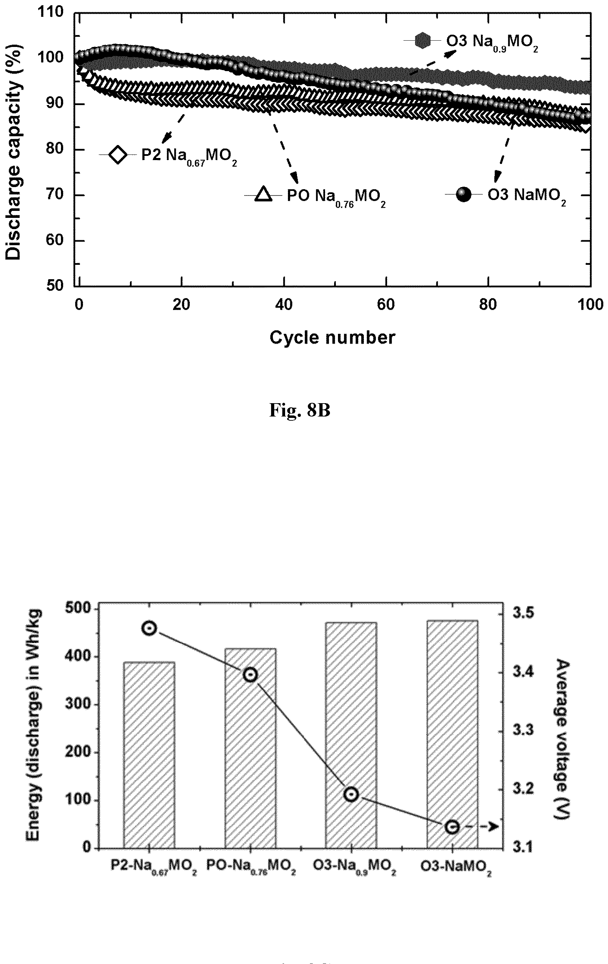

Figure 8 compares the electrochemical performance of the 4 different compositions in Na-ion full cells. The cycling profile in Figure 8A shows that the maximum capacity obtained is the least for P2 phase and maximum for O3 phase. The capacity above 3V is quite closer for all the compositions indicating if the application requires cycling exclusively above 3V, all the 4 phases studied will have similar capacities irrespective of the total capacity. But, the P2-O3 intergrowth is good for zero volt stability of the cells during external short, as it exhibits low voltage redox compare to pure P2 type material. Figure 8B compares the capacity retention where similar capacity retention is obtained with all 4 samples. Figure 8C compares the specific energy and average voltage of the cell, where P2 phase exhibit the maximum average voltage among all.

Next, the P2 and O3 phase materials were analysed for the possible transition metal dissolution during cycling. To obtain desodiated electrodes, the sodium layered oxides were charged to 4.5 V (100 % SOC) and washed with dimethyl carbonate (DMC). The recovered electrode was treated with 1M $NaPF_6$ in organic carbonate and stored at 55 °C for 1- 3 weeks. The electrolyte recovered from the solid by filtration was analysed by inductively coupled plasma (ICP) analysis for the dissolved Ni content. The dissolved transition metal ion, not only deteriorate the electrochemical performance of the positive electrode, but can also poison the negative electrode (HC in Na-ion cells). The phases having huge P2 content show less Ni dissolution in comparison to the O3 phase in electrolyte (0.202% for P2 vs 2% Ni for O3).

**Example 4**

The following compounds of the invention were made using the same method as described in Example 2:

P2-phase $Na_{0.7}Ni_{0.2}Fe_{0.3}Mn_{0.35}Ti_{0.15}O_2$, and
P2-phase $Na_{0.7}Ni_{0.25}Fe_{0.2}Mn_{0.40}Ti_{0.15}O_2$.

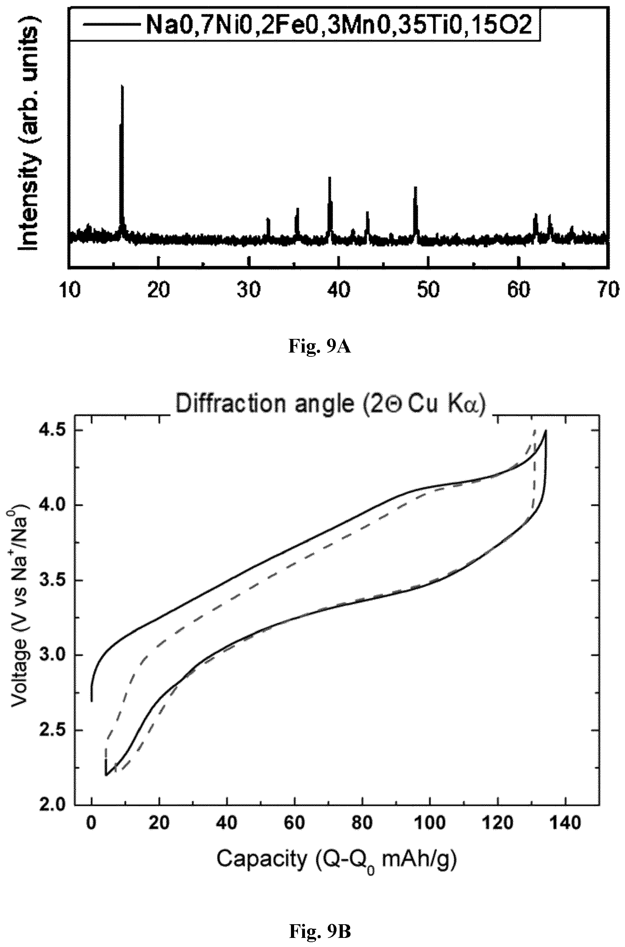

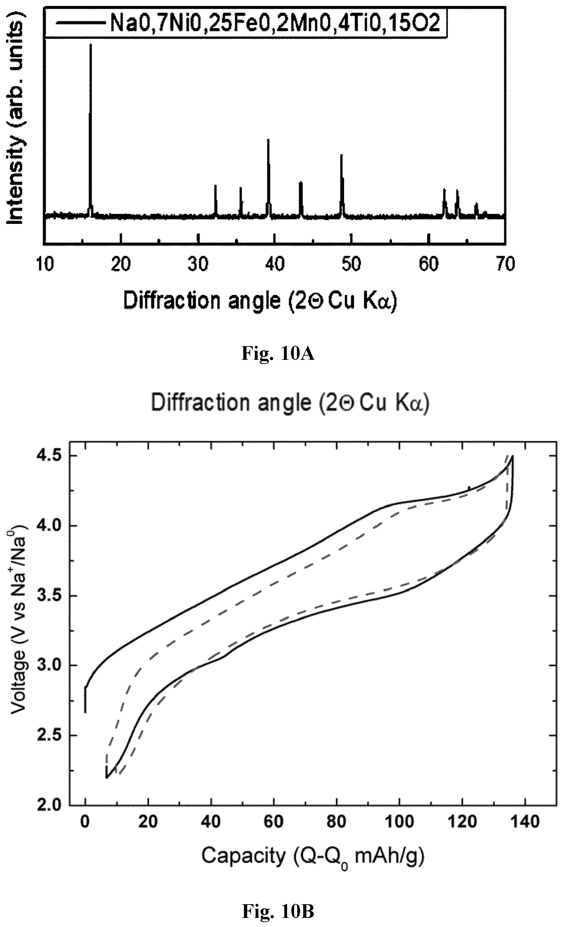

The X-ray diffraction pattern of Fig. 9A and 10A show they are both a P2 phase. Their capacity (see Figures 9B and 10B) is similar to that of P2 $Na_{0.67}Ni_{0.3}Zn_{0.03}Mn_{0.52}Ti_{0.15}O_2$, however with reduced amount of nickel, while utilizing more of earth abundant $Fe^{3+}$. Fig. 10B shows cycling performance in Na-ion half cells having sodium metal as negative electrode of P2 $Na_{0.7}Ni_{0.25}Fe_{0.2}Mn_{0.35}Ti_{0.15}O_2$.

**Example 5**

To show the facile replacement of $Zn^{2+}$ ion by other $M^{2+}$ ions such as $Cu^{2+}$ and $Mg^{2+}$ the following compounds of the invention were made using the same method as described in Example 2:

P2-$Na_{0.67}Ni_{0.3}Cu_{0.03}Mn_{0.52}Ti_{0.15}O_2$; and
P2-$Na_{0.67}Ni_{0.3}Mg_{0.03}Mn_{0.52}Ti_{0.15}O_2$.

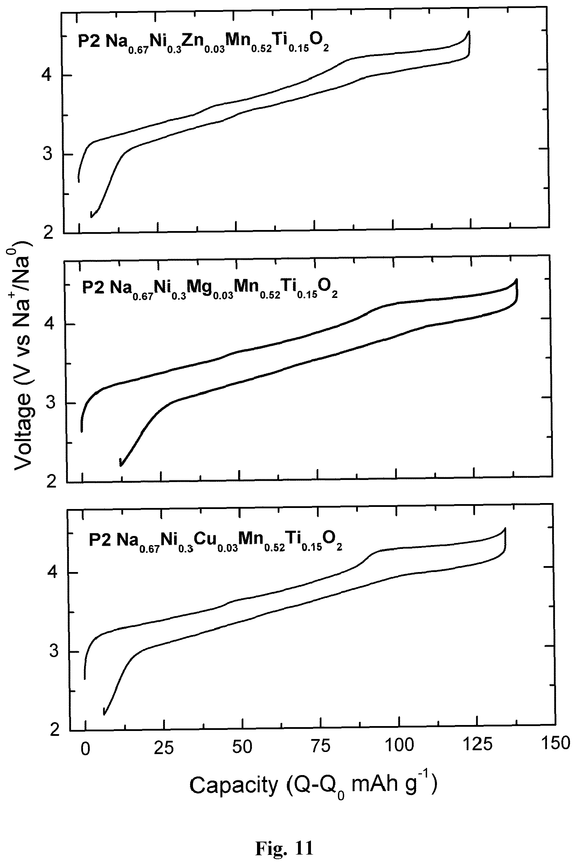

Fig. 11 shows the electrochemical cycling curves of $Na_{0.67}Ni_{0.3}Cu_{0.03}Mn_{0.52}Ti_{0.15}O_2$ and $Na_{0.67}Ni_{0.3}Mg_{0.03}Mn_{0.52}Ti_{0.15}O_2$ which are identical to the parent phase $Na_{0.67}Ni_{0.3}Zn_{0.03}Mn_{0.52}Ti_{0.15}O_2$ where the $Zn^{2+}$ is replaced by either $Cu^{2+}$ or $Mg^{2+}$.

**Example 6**

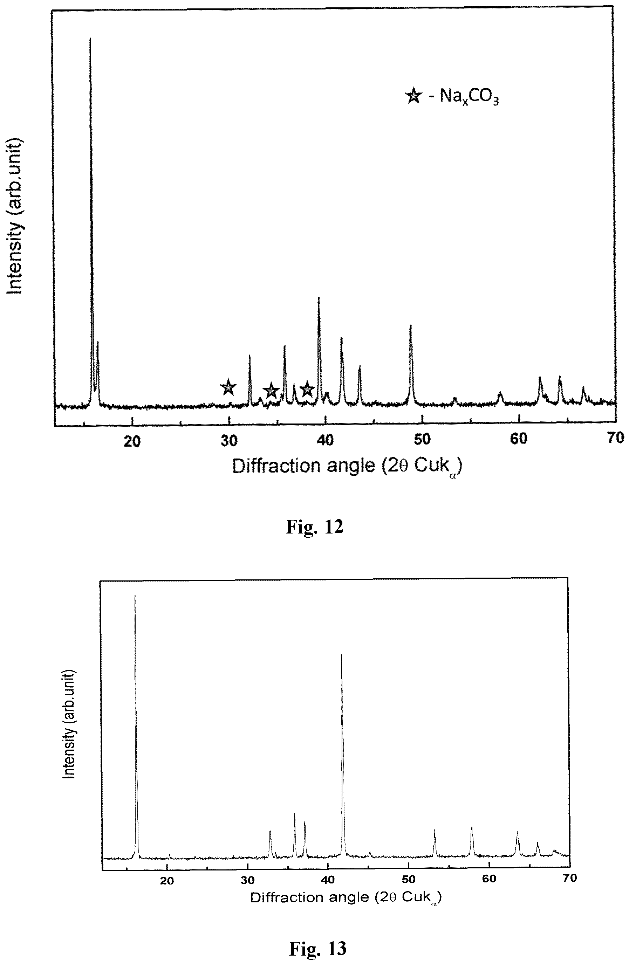

To show the importance of balancing the proper stoichiometry for the control of end phase, synthesis was carried out by aiming the composition $Na_{0.76}Ni_{0.35}Zn_{0.03}Mn_{0.52}Ti_{0.1}O_2$, however using excess $Na_2CO_3$ in the synthesis. The XRD in Figure 12 shows the formation of P2-O3 $Na_{0.76}Ni_{0.35}Zn_{0.03}Mn_{0.52}Ti_{0.1}O_2$ phase, however with excess sodium (i.e. 1.1 instead of 0.76) stabilizing as $Na_2CO_3$ secondary phase. By repeated grinding and re-heating steps, O3 $Na_1Ni_{0.35}Zn_{0.03}Mn_{0.52}Ti_{0.1}O_2$ phase was obtained as in Figure 13, but the manganese in this material stabilize in $Mn^{3+}$ and the material is sensitive to moist air and not stable as O3 phase. The compound of Figure 12 was milled again and reheated to 1000 °C (2 times of 6 hours at 1000 °C with cooling, grinding and reheating in each step) for 6 hours. The obtained O3 phase shown in Figure 13 was expose to air just for 3 hours, reacted with moisture and lead to a new phase (P3). The same effect was obtained by heating an already form pure phase P2-O3 $Na_{0.76}Ni_{0.35}Zn_{0.03}Mn_{0.52}Ti_{0.1}O_2$ with $Na_2CO_3$.

**Conclusion**

All the synthesized materials showed better moisture stability than the O3 material having 1 sodium, with the best stability obtained for pure P2 phase material. The main examples consist in using $Ni^{2+}$, $Zn^{2+}$, $Mn^{4+}$ and $Ti^{4+}$ ions. Among the different compositions designed to obtain x= 0.67, 0.76, 0.9 and 1 (for comparison), the best result with respect to moisture stability is reached with P2 type $Na_{0.67}Ni_{0.3}Zn_{0.03}Mn_{0.52}Ti_{0.15}O_2$

**Reference**

1. Ivana Hasa, Sathiya Mariyappan, Damien Saurel, Philipp Adelhelm, Alexey Y.Koposov, Christian Masquelier, Laurence Croguennec, Montse Casas-Cabanas. Challenges of today for Na-based batteries of the future: From materials to cell metrics., Journal of Power Sources, 482, p. 228872 (2020). DOI: 10.1016/j.jpowsour.2020.228872
2. J.-M. Tarascon, Na-ion versus Li-ion batteries: Complementary rather than competitive ness. Joule. 4(8), p. 161-1620 (2020).
3. Y. Subramanian, W. Oh, W. Choi, H. Lee, M. Jeong, R. Thanavel, W-S. Yoon, Optimizing high voltage Na3V2(PO4)2F3 cathode for achieving high rate sodium ion batteries with long cycle life. Chemical Engineering Journal. 403, p. 126291 (2021).
4. K. Kubota, S. Kumakura, Y. Yoda, K. Kuroki, and S. Komaba, Electrochemistry and Solid-State Chemistry of NaMeO2 (Me = 3d Transition Metals). Adv. Energy Mater., 8, 1703415 (2018).
5. K. Smith, J. Treacher, D. Ledwoch, P. Adamson, and E. Kendrick, Novel High Energy Density Sodium Layered Oxide Cathode Materials: From Material to Cells. ECS Trans., 75, 13-24 (2017).
6. C. Delmas, C. Fouassier, and P. Hagenmuller, Structural Classification and Properties of the Layered Oxides. Phys. BC, 99, 81-85 (1980).
7. M Sathiya, J Thomas, D Batuk, V Pimenta, R Gopalan, JM Tarascon, Dual Stabilization and Sacrificial Effect of Na2CO3 for Increasing Capacities of Na-Ion Cells Based on P2-NaxMO2 Electrodes. Chemistry of Materials, 29 (14), 5948-5956 (2017).

**Claims**

1. A sodium layered oxide of formula I:

$$Na_xM1^{a+}_{1-y-z-n}M2^{b+}_yM3^{c+}_zM4^{d+}_nO_2, \qquad (I),$$

wherein:

M1$^{a+}$, M2$^{b+}$, M3$^{c+}$ and M4$^{d+}$ are different transition metal ions or mixtures thereof,
x is a number ranging from 0.5 to strictly less than 1;
y, z and n are numbers ranging from 0.01 to 0.85;

y + z + n is less than 1;

a, b, c and d are the respective oxidation number of the transition metal ions M1, M2, M3 and M4, respectively; and

the cumulative oxidation state of transition metal ions $a*(1-y-z-n)+(b*y)+(c*z)+(d*n)$ is equal to 4-x;

and wherein said sodium layered oxide of formula I is not P2-$Na_{2/3}Ni_{1/4}Mn_{1/2}Ti_{1/6}Zn_{1/12}O_2$, P2-$Na_{2/3}Ni_{1/4}Mn_{1/2}Ti_{1/6}Mg_{1/12}O_2$, or P2-$Na_{2/3}Ni_{1/4}Mn_{1/2}Ti_{1/6}Mg_{1/12}O_2$.

2. The sodium layered oxide of claim 1, wherein its crystal structure is chosen in the group consisting of O3, when x ranges from 0.8 to less than 1, P2-O3 mixture when x ranges between 0.7 to 0.8 and P2 when x is ≤ 0.7; preferably its crystal structure is a P2-O3.

3. The sodium layered oxide of claim 1 or 2 wherein M1 is Ni.

4. The sodium oxide according to any one of claim 1 to 3, wherein M2, M3 and M4 are chosen is the group consisting of Mg, Zn, Cu, Fe, V, Cr, Mn, Ge, Sn, Ti, Zr Co and a mixture thereof, preferably in the group consisting of Zn, Mn, Ti, Cu, Fe, Mg and a mixture thereof, even more preferably in the group consisting of Zn, Mn and Ti.

5. The sodium layered oxide according to claim 1 or 2 wherein M1 is Ni, M2 and M4 are either Mn or Ti, and y is less than 0.07, preferably less than 0.06 and advantageously less than 0.5.

6. The sodium layered oxide according to any one of claims 1 to 5 having the formula $Na_{0.67}Ni_{0.3}Zn_{0.03}Mn_{0.52}Ti_{0.15}O_2$, $Na_{0.7}Ni_{0.2}Fe_{0.3}Mn_{0.35}Ti_{0.15}O_2$, $Na_{0.7}Ni_{0.25}Fe_{0.2}Mn_{0.40}Ti_{0.15}O_2$, $Na_{0.67}Ni_{0.3}Cu_{0.03}Mn_{0.52}Ti_{0.15}O_2$ or $Na_{0.67}Ni_{0.3}Mg_{0.03}Mn_{0.52}Ti_{0.15}O_2$, preferably $Na_{0.67}Ni_{0.3}Zn_{0.03}Mn_{0.52}Ti_{0.15}O_2$.

7. A process for preparing the sodium layered oxide of formula I:

$$Na_x M1^{a+}_{1-y-z-n} M2^{b+}_y M3^{c+}_z M4^{d+}_n O_2, \qquad (I),$$

wherein:

$M1^{a+}$, $M2^{b+}$, $M3^{c+}$ and $M4^{d+}$ are different transition metal ions or mixtures thereof,

x is a number ranging from 0.5 to strictly less than 1;

y, z and n are numbers ranging from 0.01 to 0.85;

y + z + n is less than 1;

a, b, c and d are the respective oxidation number of the metal ions M1, M2, M3 and M4, respectively; and

the cumulative oxidation state of transition metal ions $a*(1-y-z-n)+(b*y)+(c*z)+(d*n)$ is equal to 4-x;

said process comprising the steps of:

(a) mixing together powders of a sodium precursor and transition metal precursors of said sodium layered oxide in stoichiometric amounts to obtain a solid powdered mixture;

(b) heating said solid powdered mixture in a temperature range of 500°C to 900°C in air atmosphere to obtain a calcinated powder;

(c) cooling the calcinated powder at a rate of 1.5°C/min or less;

(d) milling said calcinated powder to obtain a milled calcinated powder;

(e) heating said solid powdered mixture in a temperature range of 700°C to 1100°C in air atmosphere to obtain a milled re-calcinated powder;

(f) cooling said re-calcinated powder at a rate of 1.5°C/min or less.

8. An electrode material comprising :

- the sodium layered oxide according to any one claims 1 to 7;
- an electronically conductive additive such as carbon black; and
- optionally a polymeric binder.

9. An electrochemical cell comprising:

- an electrolyte;

- a negative electrode configured to reversibly accept sodium ions from an electrolyte and to reversibly release sodium ions to the electrolyte, the negative electrode having at least one current collector;
- a positive electrode comprising a sodium layered oxide according to anyone of the claims 1 to 7 or an electrode material according to claim 8 configured to reversibly accept sodium ions from the electrolyte and to reversibly release sodium ions to the electrolyte, the positive electrode having at least one current collector; and
- a separator admixed with the electrolyte comprising sodium ions, in contact with both the negative and positive electrodes.

10. The electrochemical cell according to claim 9, wherein the separator is selected from the group consisting of glass fibres, polyolefin separators and cellulose-based films.

11. The electrochemical cell according to claim 9 or 10, wherein the negative electrode comprises sodium metal, a carbonaceous compound, hard carbon, antimony, tin, phosphorous or a mixture thereof.

12. The electrochemical cell according to anyone of claims 9 to 11, wherein the cell is a coin cell, a pouch cell, a cylindrical cell, or a prismatic cell.

13. The electrochemical cell according to anyone of claims 9 to 12, wherein the electrolyte comprises:

- a sodium salt, such as $NaPF_6$, $NaClO_4$, NaFSI, NaTFSI, NaBETI, $NaBF_4$, Na[B(hexafluoroisopropyloxy, OiPrF)4], Na[B(perfluorinated pinacolato, $O_2C_2(CF_3)_4$)2] or a mixture thereof;
- a solvent such as dimethyl carbonate, ethyl methyl carbonate, diethyl carbonate , propylene carbonate, ethylene carbonate; Esters, such as methyl acetate, ethyl acetate, ethyl propionate, or methyl propionate, or a mixture thereof; and
- optionally an additive such as vinylene carbonate, 1,3-propanesultone, Succinonitrile, Sodium difluoro(oxalato)borate or a mixture thereof.

14. A battery comprising a series of electrodes as described in any one of claims which comprises a series of electrochemical cells according to any one of claims 9 to 13.

15. Use of a compound as described in anyone of claims 1 to 7 as an electroactive compound in a cell or a battery, preferably as a positive electrode material.

**Figure 1A**

**Figure 1B**

Figure 2

Figure 3

**Figure 4A**

**Figure 4B**

**Figure 5**

**Figure 6**

Fig. 7

**Fig. 8A**

**Fig. 8B**

Fig. 9A

Fig. 9B

**Fig. 10A**

**Fig. 10B**

**Fig. 11**

**Fig. 12**

**Fig. 13**

Europäisches
Patentamt

European
Patent Office

Office européen
des brevets

**EUROPEAN SEARCH REPORT**

Application Number

EP 22 30 6245

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 927 663 A (UNIV SCIENCE & TECHNOLOGY CHINA) 19 August 2022 (2022-08-19) | 1,2,4, 8-15 | INV. C01G53/00 |
| Y | * $Na0.67Ni0.165Cu0.1Zn0.05Fe0.03Mn0.655O2$; example 1 * | 1-15 | |
| Y | KE CHUNYU ET AL: "P2-NaMnNiMgAlXO(X = Zr, Ce) as high performance cathode materials for sodium-ion batteries", IONICS, KIEL, DE, vol. 26, no. 2, 6 September 2019 (2019-09-06), pages 727-734, XP037004121, ISSN: 0947-7047, DOI: 10.1007/S11581-019-03216-W [retrieved on 2019-09-06] * the whole document * | 1-15 | |
| X | US 2016/211516 A1 (HU YONGSHENG [CN] ET AL) 21 July 2016 (2016-07-21) | 1-4,7-15 | |
| Y | * examples 7-20 * | 1-15 | TECHNICAL FIELDS SEARCHED (IPC) |
| X | WANG JIN ET AL: "High-rate performance O3-NaNi0.4Mn0.4Cu0.1Ti0.1O2as a cathode for sodium ion batteries", JOURNAL OF ALLOYS AND COMPOUNDS, vol. 792, 5 April 2019 (2019-04-05), pages 1054-1060, XP085681754, ISSN: 0925-8388, DOI: 10.1016/J.JALLCOM.2019.04.053 * the whole document * | 1-4,7-15 | C01G |

-/--

The present search report has been drawn up for all claims

| Place of search | Date of completion of the search | Examiner |
|---|---|---|
| Munich | 13 February 2023 | Timmermans, Michel |

EPO FORM 1503 03.82 (P04C01)

Europäisches
Patentamt

European
Patent Office

Office européen
des brevets

# EUROPEAN SEARCH REPORT

**Application Number**

EP 22 30 6245

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YU TAE-YEON ET AL: "High-performance Ti-doped O3-type Na[Ti$_x$(Ni0.6Co0.2Mn0.2)1-x]O2cathodes for practical sodium-ion batteries", JOURNAL OF POWER SOURCES, vol. 422, 15 March 2019 (2019-03-15), pages 1-8, XP085652337, ISSN: 0378-7753, DOI: 10.1016/J.JPOWSOUR.2019.03.031 | 1-4,7-15 | |
| Y | * the whole document * | 1-15 | |
| X | VASAVAN HARI NARAYANAN ET AL: "Enhanced rate performance and specific capacity in Ti-substituted P2-type layered oxide enabled by crystal structure and particle morphology modifications", CHEMICAL ENGENEERING JOURNAL, ELSEVIER, AMSTERDAM, NL, vol. 448, 18 June 2022 (2022-06-18), XP087161420, ISSN: 1385-8947, DOI: 10.1016/J.CEJ.2022.137662 [retrieved on 2022-06-18] | 1-4,8-15 | |
| | | | **TECHNICAL FIELDS SEARCHED (IPC)** |
| Y | * the whole document * | 1-15 | |
| X | EP 3 405 988 B1 (HALDOR TOPSOE AS [DK]) 25 September 2019 (2019-09-25) | 1-4,7-15 | |
| Y | * tables 1a,1b,2a,2b * | 1-15 | |

-/--

The present search report has been drawn up for all claims

| Place of search | Date of completion of the search | Examiner |
|---|---|---|
| Munich | 13 February 2023 | Timmermans, Michel |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

Europäisches
Patentamt

European
Patent Office

Office européen
des brevets

# EUROPEAN SEARCH REPORT

**Application Number**

**EP 22 30 6245**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XUE LING ET AL: "Enhancing the electrochemical performance of P2-type layered cathode by Cu/Mo co-substitution", MATERIALS LETTERS, ELSEVIER, AMSTERDAM, NL, vol. 303, 22 July 2021 (2021-07-22), XP086754745, ISSN: 0167-577X, DOI: 10.1016/J.MATLET.2021.130507 [retrieved on 2021-07-22] | 1-3,8-15 | |
| Y | * Na0.67Ni0.33Mn0.57Cu0.05Mo0.05O2; the whole document * | 1-15 | |
| Y | US 2022/123299 A1 (HUANG LITING [CN] ET AL) 21 April 2022 (2022-04-21) * table 1 * | 1-15 | |
| Y | US 2021/331938 A1 (FOLD VON BÜLOW JON [DK]) 28 October 2021 (2021-10-28) * paragraph [[0020]] * | 1-15 | |
| Y | US 2021/344009 A1 (FOLD VON BÜLOW JON [DK] ET AL) 4 November 2021 (2021-11-04) * paragraph [[0035]] * | 1-15 | TECHNICAL FIELDS SEARCHED (IPC) |
| X | US 2021/155501 A1 (BARKER JEREMY [GB] ET AL) 27 May 2021 (2021-05-27) | 1-4,7-15 | |
| Y | * paragraph [[0151]] - paragraph [[0197]] * | 1-15 | |
| X | US 2017/190595 A1 (SAYERS RUTH [GB] ET AL) 6 July 2017 (2017-07-06) | 1-4,7-15 | |
| Y | * example all * | 1-15 | |

The present search report has been drawn up for all claims

| Place of search | Date of completion of the search | Examiner |
|---|---|---|
| Munich | 13 February 2023 | Timmermans, Michel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 6245

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2023

| Patent document cited in search report | | Publication date | Patent family member(s) | | Publication date |
|---|---|---|---|---|---|
| CN 114927663 | A | 19-08-2022 | NONE | | |
| US 2016211516 | A1 | 21-07-2016 | CN | 104795551 A | 22-07-2015 |
| | | | EP | 3021386 A1 | 18-05-2016 |
| | | | JP | 6165345 B2 | 19-07-2017 |
| | | | JP | 2016537294 A | 01-12-2016 |
| | | | KR | 20170068354 A | 19-06-2017 |
| | | | US | 2016211516 A1 | 21-07-2016 |
| | | | WO | 2016008350 A1 | 21-01-2016 |
| EP 3405988 | B1 | 25-09-2019 | CN | 108475782 A | 31-08-2018 |
| | | | EP | 3405988 A1 | 28-11-2018 |
| | | | HU | E046769 T2 | 30-03-2020 |
| | | | PL | 3405988 T3 | 31-03-2020 |
| | | | WO | 2017125279 A1 | 27-07-2017 |
| US 2022123299 | A1 | 21-04-2022 | CN | 112670497 A | 16-04-2021 |
| | | | EP | 3972016 A1 | 23-03-2022 |
| | | | US | 2022123299 A1 | 21-04-2022 |
| | | | WO | 2021057457 A1 | 01-04-2021 |
| US 2021331938 | A1 | 28-10-2021 | AU | 2019353661 A1 | 22-04-2021 |
| | | | CN | 112689614 A | 20-04-2021 |
| | | | EP | 3860952 A1 | 11-08-2021 |
| | | | JP | 2022549390 A | 25-11-2022 |
| | | | KR | 20210062637 A | 31-05-2021 |
| | | | US | 2021331938 A1 | 28-10-2021 |
| | | | WO | 2020069935 A1 | 09-04-2020 |
| US 2021344009 | A1 | 04-11-2021 | AU | 2019353668 A1 | 29-04-2021 |
| | | | CN | 112689613 A | 20-04-2021 |
| | | | EP | 3860953 A1 | 11-08-2021 |
| | | | JP | 2022504285 A | 13-01-2022 |
| | | | KR | 20210070283 A | 14-06-2021 |
| | | | US | 2021344009 A1 | 04-11-2021 |
| | | | WO | 2020069971 A1 | 09-04-2020 |
| US 2021155501 | A1 | 27-05-2021 | AU | 2019253500 A1 | 08-10-2020 |
| | | | CN | 112262109 A | 22-01-2021 |
| | | | EP | 3774663 A1 | 17-02-2021 |
| | | | JP | 2021520333 A | 19-08-2021 |
| | | | KR | 20200141457 A | 18-12-2020 |
| | | | PH | 12020551622 A1 | 12-07-2021 |
| | | | SG | 11202009654P A | 29-10-2020 |
| | | | US | 2021155501 A1 | 27-05-2021 |
| | | | WO | 2019197812 A1 | 17-10-2019 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 22 30 6245

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2023

| Patent document cited in search report | | Publication date | Patent family member(s) | | Publication date |
|---|---|---|---|---|---|
| US 2017190595 | A1 | 06-07-2017 | CN | 106414337 A | 15-02-2017 |
| | | | CN | 106458634 A | 22-02-2017 |
| | | | CN | 108923044 A | 30-11-2018 |
| | | | DK | 3145869 T3 | 28-09-2020 |
| | | | DK | 3145870 T3 | 22-10-2018 |
| | | | EP | 3145869 A1 | 29-03-2017 |
| | | | EP | 3145870 A1 | 29-03-2017 |
| | | | EP | 3456688 A1 | 20-03-2019 |
| | | | ES | 2686823 T3 | 22-10-2018 |
| | | | JP | 6564397 B2 | 21-08-2019 |
| | | | JP | 6820746 B2 | 27-01-2021 |
| | | | JP | 7155220 B2 | 18-10-2022 |
| | | | JP | 2017521342 A | 03-08-2017 |
| | | | JP | 2017521815 A | 03-08-2017 |
| | | | JP | 2021036523 A | 04-03-2021 |
| | | | KR | 20170008773 A | 24-01-2017 |
| | | | KR | 20170012264 A | 02-02-2017 |
| | | | KR | 20200053633 A | 18-05-2020 |
| | | | PL | 3145870 T3 | 30-11-2018 |
| | | | US | 2017174527 A1 | 22-06-2017 |
| | | | US | 2017190595 A1 | 06-07-2017 |
| | | | US | 2019100441 A1 | 04-04-2019 |
| | | | WO | 2015177544 A1 | 26-11-2015 |
| | | | WO | 2015177556 A1 | 26-11-2015 |

EPO FORM P0459

For more details about this annex : see Official Journal of the European Patent Office, No. 12/82

page 2 of 2

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020260294 A

- EP 3121879 A1

**Non-patent literature cited in the description**

- **IVANA HASA ; SATHIYA MARIYAPPAN ; DAMIEN SAUREL ; PHILIPP ADELHELM ; ALEXEY Y.KOPOSOV ; CHRISTIAN MASQUELIER ; LAURENCE CROGUENNEC ; MONTSE CASAS-CABANAS.** Challenges of today for Na-based batteries of the future: From materials to cell metrics. *Journal of Power Sources,* 2020, vol. 482, 228872

- **J.-M. TARASCON.** Na-ion versus Li-ion batteries: Complementary rather than competitive ness. *Joule,* 2020, vol. 4 (8), 161-1620

- **Y. SUBRAMANIAN ; W. OH ; W. CHOI ; H. LEE ; M. JEONG ; R. THANAVEL ; W-S. YOON.** Optimizing high voltage Na3V2(PO4)2F3 cathode for achieving high rate sodium ion batteries with long cycle life. *Chemical Engineering Journal,* 2021, vol. 403, 126291

- **K. KUBOTA ; S. KUMAKURA ; Y. YODA ; K. KUROKI ; S. KOMABA.** Electrochemistry and Solid-State Chemistry of NaMeO2 (Me = 3d Transition Metals). *Adv. Energy Mater.,* 2018, vol. 8, 1703415

- **K. SMITH ; J. TREACHER ; D. LEDWOCH ; P. ADAMSON ; E. KENDRICK.** Novel High Energy Density Sodium Layered Oxide Cathode Materials: From Material to Cells. *ECS Trans.,* 2017, vol. 75, 13-24

- **C. DELMAS ; C. FOUASSIER ; P. HAGENMULLER.** Structural Classification and Properties of the Layered Oxides. *Phys. BC,* 1980, vol. 99, 81-85

- **M SATHIYA ; J THOMAS ; D BATUK ; V PIMENTA ; R GOPALAN ; JM TARASCON.** Dual Stabilization and Sacrificial Effect of Na2CO3 for Increasing Capacities of Na-Ion Cells Based on P2-NaxMO2 Electrodes. *Chemistry of Materials,* 2017, vol. 29 (14), 5948-5956